# EUROPÄISCHE PATENTSCHRIFT

(11) **EP 0 848 924 B1**
(45) Veröffentlichungstag und Bekanntmachung des Hinweises auf die Patenterteilung: **29.12.1999**
(21) Anmeldenummer: 97117236.6
(22) Anmeldetag: 06.10.1997
(51) Int. Cl.: A47J 27/62, A47J 27/16

(54) **Gargerät mit Heissluft- und/oder Dampfbetrieb**
Cooking apparatus heated by hot air and/or steam
Appareil de cuisson chauffé par de l'air chaud et/ou de la vapeur

(30) Priorität: 11.12.1996 DE 19651514
(43) Veröffentlichungstag der Anmeldung: 24.06.1998
(73) Patentinhaber: RATIONAL GmbH, 86899 Landsberg a. Lech (DE)
(72) Erfinder: Druth, Winfried, 86899 Landsberg (DE)
(74) Vertreter: Goddar, Heinz J., Dr.

(56) Entgegenhaltungen:
- EP-A- 0 168 985
- GB-A- 2 165 370
- US-A- 4 572 935
- PATENT ABSTRACTS OF JAPAN vol. 096, no. 002, 29.Februar 1996 & JP 07 253214 A (RINNAI CORP), 3.Oktober 1995,

## Beschreibung

Die Erfindung betrifft ein Gargerät mit einem Dampferzeuger der über eine Bedienkonsole sowie eine Elektronik zum Einführen von Heißluft und/oder Dampf in den Garraum des Gargeräts steuerbar ist, wobei die Bedienkonsole eine erste Taste für einen Heißluftbetrieb und eine zweite Taste für einen Dampfbetrieb umfaßt.

Gargeräte der gattungsgemäßen Art sind im Stand der Technik gut bekannt. So offenbart, beispielsweise, das deutsche Gebrauchsmuster G 89 01 904 einen Damperzeuger für Gargeräte für im Kombinationsbetrieb mit Heißluft und Heißdampf arbeitende Tisch- oder Standgeräte für die Gastronomie, Großküchen oder dergleichen. Ferner ist, beispielsweise, aus der EP-0 386 862 B1 ein Gargerät mit einem Garraum und einer Einrichtung zum Einführen von Wasser in flüssiger Form oder in Dampfform in den Garraum bekannt. Auch offenbart die US 4,572,935 ein gattungsgemäßes Gargerät (vgl. Oberbegriff des Anspruchs 1) mit einer Bedienkonsole, über die wahlweise eine Taste für einen Heißluftbetrieb oder einen Dampfbetrieb betätigbar ist.

Zwar haben sich die bekannten Gargeräte durchaus bewährt, jedoch muß eine Bedienperson bei den bekannten Gargeräten zum Einführen von Heißluft, zum Einführen von Dampf oder zum Einführen von Heißluft sowie Dampf in einen Garraum herkömmlicherweise drei unterschiedliche Tasten drücken bzw. einen Wählhebel bedienen, um unterschiedliche Garprogramme anzuwählen, was sich nachteilig sowohl auf die Übersichtlichkeit als auch auf die Kompaktheit einer entsprechenden Bedienkonsole auswirkt.

Im Stand der Technik ist es außerdem bekannt, einer Taste mehrere Funktionen zuzuweisen, damit die Tastenanzahl auf eine Bedienkonsole reduziert werden kann, wie, beispielsweise, in der GB 2 165 370 A und JP 07253214 offenbart. Eine Mehrfachbelegung einer Taste führt jedoch zu Bedienschwierigkeiten, insbesondere wenn die Auswahl einer Funktion über zumindest ein Zeitintervall zwischen zwei Betätigungsvorgängen geschieht.

Aufgabe der vorliegenden Erfindung ist daher, das gattungsgemäße Gargerät dahingehend weiterzuentwicklen, daß die Nachteile des Stands der Technik überwunden werden, d.h. insbesondere eine übersichtliche, kompakte sowie leicht bedienbare Bedienkonsole für einen Heißluft-Betrieb, Dampf-Betrieb oder Heißluft-Dampf-Betrieb bereitgestellt wird.

Diese Aufgabe wird gemäß der Erfindung dadurch gelöst, daß die erste Taste und die zweite Taste über einen UND-Schalter miteinander verbunden sind, und zwischen einerseits der ersten Taste und/oder der zweiten Taste und andererseits dem UND-Schalter eine Verzögerungseinheit so angeschlossen ist, daß durch Betätigen der beiden Tasten auch mit einer kleinen Zeitverzögerung zueinander ein Kombinationsbetrieb mit Heißluft und Dampf einstellbar ist.

Weitere Merkmale und Vorteile der Erfindung ergeben sich aus der nachfolgenden Beschreibung, in der eine Ausführungsbeispiel anhand einer Zeichnung erläutert ist.

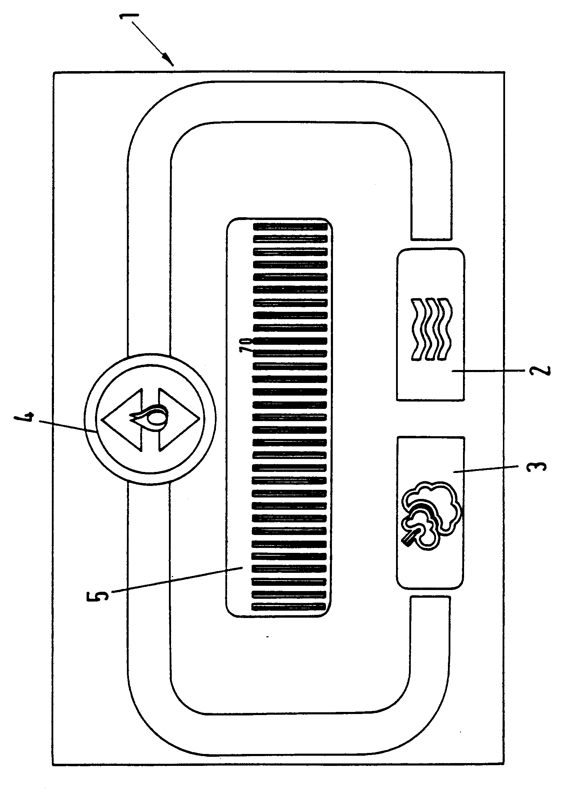

Dabei zeigt die eine einzige Figur umfassende Zeichnung eine Bedienkonsole für eine Gargerät gemäß der Erfindung.

Wie der Figur zu entnehmen ist, umfaßt eine Bedienkonsole 1 für ein nicht gezeigtes Gargerät gemäß der Erfindung, mit einen, Garraum und einem Dampferzeuger, eine Taste 2 zum Einstellen einer Heißluftzuführung, eine Taste 3 zum Einstellen einer Dampfzuführung, eine Taste 4 zur Temperaturregelung und eine Anzeige 5 für die eingestellte Temperatur. Die Bedienkonsole 1 ist dabei über eine geeignete, nicht gezeigte Elektronik mit dem Dampferzeuger des Gargeräts so verbunden, daß durch Betätigen der Taste 2 ein Heißluft-Betrieb, durch Betätigen der Taste 3 ein Dampf-Betrieb und durch mehr oder weniger gleichzeitiges oder, besser gesagt, leicht zueinander verzögertes Drücken der beiden Tasten 2 und 3 ein Kombinationsbetrieb mit Heißluft und Dampf eingestellt werden kann.

### Bezugszeichenliste

- 1: Bedienkonsole
- 2: Taste
- 3: Taste
- 4: Taste
- 5: Display

## Patentansprüche

1. Gargerät mit einem Dampferzeuger, der über eine Bedienkonsole (1) sowie eine Elektronik zum Einführen von Heißluft und/oder Dampf in den Garraum des Gargeräts steuerbar ist, wobei die Bedienkonsole (1) eine erste Taste (2) für einen Heißluftbetrieb und eine zweite Taste (3) für einen Dampfbetrieb umfaßt.
dadurch gekennzeichnet, daß
die erste Taste (2) und die zweite Taste (3) über einen UND-Schalter miteinander verbunden sind, und zwischen einerseits der ersten Taste (2) und/oder der zweiten Taste (3) und andererseits dem UND-Schalter eine Verzögerungseinheit so angeschlossen ist, daß durch Betätigen der beiden Tasten (2, 3) auch mit einer kleinen Zeitverzögerung zueinander ein Kombinationsbetrieb mit Heißluft und Dampf einstellbar ist.

## Claims

1. A cooking appliance with a steam generator which by way of a control panel (1) and an electronic system is controllable for the introduction of hot air and/or steam into the cooking chamber of the cooking appliance, the control panel (1) comprising a first key (2) for hot air operation and a second key (3) for steam operation, characterised in that the first key (2) and the second key (3) are interconnected via an AND switch and a delay unit is so connected between, on the one hand, the first key (2) and/or the second key (3) and, on the other hand, the AND switch that combination operation with hot air and steam can be set by actuating the two keys (2, 3) even with a small time delay relative to one another.

## Revendications

1. Appareil de cuisson comportant un générateur de vapeur pouvant être commandé, au moyen d'un pupitre de commande (1) ainsi que d'une électronique, afin d'introduire de l'air chaud et/ou de la vapeur dans la chambre de cuisson de l'appareil de cuisson, le pupitre de commande (1) comportant une première touche (2) pour un fonctionnement à l'air chaud et une seconde touche (3) pour un fonctionnement à la vapeur,
caractérisé en ce que
la première touche (2) et la seconde touche (3) sont reliées l'une à l'autre par l'intermédiaire d'un commutateur ET et en ce qu'une unité de temporisation est raccordée entre, d'une part, la première touche (2) et/ou la deuxième touche (3) et, d'autre part, le commutateur ET de sorte qu'il est possible de sélectionner un fonctionnement combiné à l'air chaud et à la vapeur en actionnant les deux touches (2, 3), même avec un petit délai l'une par rapport à l'autre.
